**Europäisches Patentamt**

**European Patent Office**

**Office européen des brevets**

(19)

(11)  **EP 1 415 390 B1**

(12)  **EUROPÄISCHE PATENTSCHRIFT**

(45) Veröffentlichungstag und Bekanntmachung des Hinweises auf die Patenterteilung:
**23.03.2005 Patentblatt 2005/12**

(51) Int Cl.$^7$: **H02P 6/00**, H02P 5/17, H02P 6/20

(21) Anmeldenummer: **02760255.6**

(22) Anmeldetag: **20.07.2002**

(86) Internationale Anmeldenummer:
**PCT/EP2002/008109**

(87) Internationale Veröffentlichungsnummer:
**WO 2003/015255 (20.02.2003 Gazette 2003/08)**

(54) **VERFAHREN ZUR STEUERUNG DER KOMMUTIERUNG BEI EINEM ELEKTRONISCH KOMMUTIERTEN MOTOR, UND ELEKTRONISCH KOMMUTIERTER MOTOR ZUR DURCHFÜHRUNG EINES SOLCHEN VERFAHRENS**

METHOD FOR CONTROLLING THE COMMUTATION IN AN ELECTRONICALLY COMMUTATED MOTOR, AND AN ELECTRONICALLY COMMUTATED MOTOR FOR CARRYING OUT SAID METHOD

PROCEDE POUR COMMANDER LA COMMUTATION DANS UN MOTEUR A COMMUTATION ELECTRONIQUE ET MOTEUR A COMMUTATION ELECTRONIQUE PERMETTANT LA MISE EN OEUVRE DE CE PROCEDE

(84) Benannte Vertragsstaaten:
**AT BE BG CH CY CZ DE DK EE ES FI FR GB GR IE IT LI LU MC NL PT SE SK TR**

(30) Priorität: **10.08.2001 DE 10139535**

(43) Veröffentlichungstag der Anmeldung:
**06.05.2004 Patentblatt 2004/19**

(73) Patentinhaber: **ebm-papst St. Georgen GmbH & Co. KG**
**78112 St. Georgen (DE)**

(72) Erfinder:
• **BERROTH, Hansjörg**
**78052 Villingen-Schwenningen (DE)**
• **VON DER HEYDT, Thomas**
**78112 St. Georgen (DE)**
• **JESKE, Frank**
**78112 St. Georgen (DE)**
• **KUNER, Arnold**
**78112 St. Georgen (DE)**
• **LAYES, Paul**
**78052 Villingen-Schwenningen (DE)**
• **SCHONDELMAIER, Hans-Dieter**
**78112 St. Georgen (DE)**
• **STRASSER, Günther**
**78112 St. Georgen (DE)**

(56) Entgegenhaltungen:
EP-A- 0 452 497            DE-A- 3 919 952
FR-A- 2 475 312

**Beschreibung**

Die Erfindung betrifft ein Verfahren zur Steuerung der Kommutierung bei einem elektronisch kommutierten Motor (ECM), und einen ECM zur Durchführung eines solchen Verfahrens.

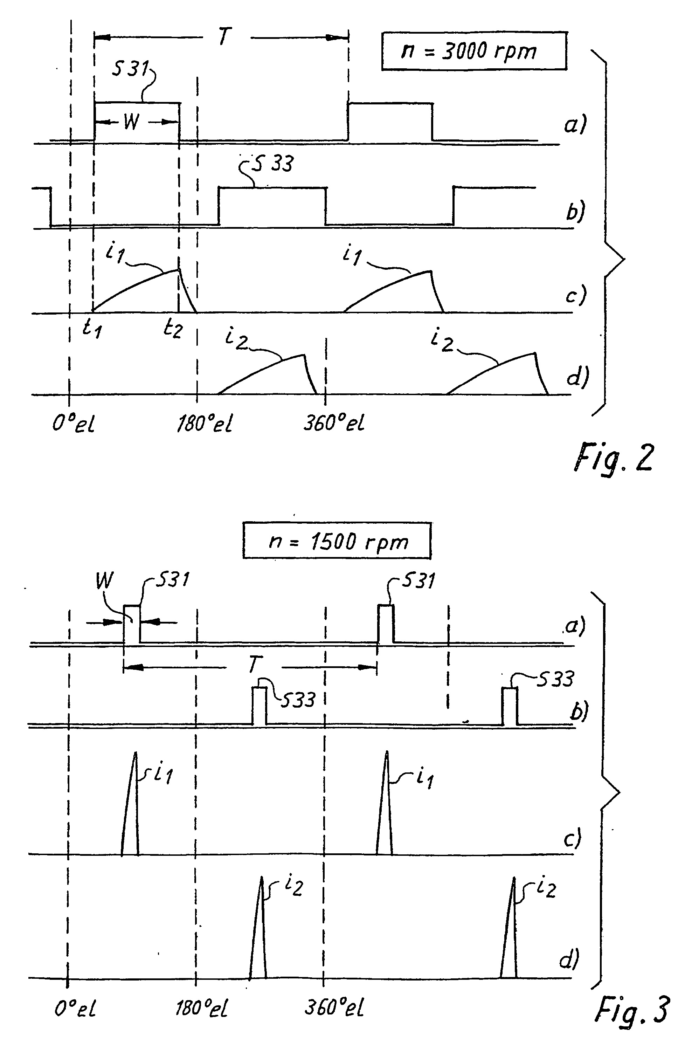

Die EP 1 107 441 A2 zeigt einen ECM, bei dem eine Anordnung zur Strombegrenzung vorgesehen ist. Die Strombegrenzung ist besonders beim Start eines Motors wichtig, denn bei niedrigen Drehzahlen eines Motors ist auch dessen durch den permanentmagnetischen Rotor in der Statorwicklung induzierte Spannung, die sogenannte Gegen-EMK (Counter EMF) niedrig, was beim Start zu hohen Strömen führen kann, die wesentlich höher sind als der Nennstrom eines solchen Motors. Ist keine Strombegrenzung vorgesehen, so ist die Höhe der Stromspitzen beim Anlauf im wesentlichen nur begrenzt durch den Wicklungswiderstand und durch die Höhe der - bei niedrigen Drehzahlen niedrigen - Gegen-EMK. Diese hohen Ströme führen zu entsprechenden Motorgeräuschen, die im hörbaren Bereich liegen und deren Frequenz der Frequenz der Kommutierung entspricht. Dies wird nachfolgend anhand von Fig. 3 erläutert.

Aus der EP 1 107 441 A2 ist es bekannt, beim Start die Strombegrenzung zu unterdrücken, um einen schnellen Hochlauf zu ermöglichen. Dies geschieht in der Weise, dass ein Überbrückungtransistor zu einem Strommesswiderstand parallelgeschaltet wird. Dieser Überbrückungtransistor wird beim Start während 0,5 Sekunden leitend gesteuert, und während dieser Zeit findet keine Strombegrenzung statt. Eine solche Erhöhung des Anlaufstroms ist jedoch nur bei kleinen Motoren statthaft und erfordert einen leistungsfähigen Überbrückungtransistor, der in der Lage sein muss, während 0,5Sekunden den stark erhöhten Anlaufstrom zu leiten.

Aus der EP 0 452 487 A1 ist es bekannt, bei einem Motor, der bei verschiedenen Solldrehzahlen arbeiten muss, die Amplitude der Stromimpulse, welche für die Stromversorgung des Motors dienen, abhängig von der eingestellten Drehzahl zu begrenzen, z.B. auf 1 A bei 500 U/min, auf 1,2 A bei 750 U/min, und auf 1,7 A bei 1250 U/min. Hierdurch sollen die Geräusche reduziert werden, die von diesen Stromimpulsen erzeugt werden.

Es ist eine Aufgabe der Erfindung, ein neues Verfahren zur Steuerung der Kommutierung, und einen dafür geeigneten neuen elektronisch kommutierten Motor bereit zu stellen.

Nach der Erfindung wird diese Aufgabe gelöst durch den Gegenstand des Patentanspruchs 1 und des Patentanspruchs 8. Durch ein solches Verfahren bzw. eine solche Vorrichtung erreicht man, dass die Strombegrenzung lastabhängig verändert wird, so dass bei niedrigen Drehzahlen, wenn der Motor eine geringe Leistung benötigt, die obere Stromgrenze niedriger ist als bei hohen Drehzahlen. Dadurch wird die Amplitude der Stromimpulse, die bei niedrigen Drehzahlen durch den Stator fließen, automatisch reduziert, und zur Kompensation wird durch den Drehzahlregler automatisch die Blocklänge dieser Impulse erhöht, was zu einem ruhigeren Lauf des Motors führt und auch eine Verbesserung des Wirkungsgrads bewirken kann.

Eine bevorzugte Weiterbildung ist Gegenstand des Anspruchs 7. Ein solches Verfahren ermöglicht es, die Form der Statorstromimpulse aktiv zu beeinflussen und dadurch einen ruhigen, störungsfreien Motorlauf zu erzielen.

Durch den erfindungsgemäßen Motor nach Anspruch 8 kann, abhängig von der Größe des zusätzlichen Steuersignals, bei einem solchen Motor ein variabler Wert für die Höhe der Strombegrenzung vorgegeben werden. Z.B. kann bei niedrigen Drehzahlen ein niedriger Wert vorgegeben werden, der mit zunehmender Drehzahl zunimmt, und bei Erreichen einer bestimmten Drehzahl des Motors wird dann die Strombegrenzung vollständig abgeschaltet, weil der Motor, infolge des Anstiegs seiner induzierten Spannung, den Strom automatisch selbst begrenzt.

Eine bevorzugte Weiterbildung ist Gegenstand des Anspruchs 16. Das höherfrequente Signal ermöglicht eine aktive Beeinflussung der Form der Statorstromimpulse, was besonders bei Motoren interessant ist, bei denen die Drehzahl Funktion einer Umgebungstemperatur ist: Solche Motoren haben bei niedrigen Temperaturen niedrige Drehzahlen und benötigen. hierfür nur einen niedrigen Strom. Dadurch, dass man in diesem Fall die Halbleiterschalter, welche den Statorstrom aus- und einschalten, nach Art von Widerständen betreiben kann, ist besonders bei einem drehzahlgeregelten Motor eine aktive Gestaltung der Form der Statorstromimpulse möglich, um einen ruhigen Lauf des Motors bei niedrigen Drehzahlen sicher zu stellen.

Weitere Einzelheiten und vorteilhafte Weiterbildungen der Erfindung ergeben sich aus den im folgenden beschriebenen und in den Zeichnungen dargestellten, Ausführungsbeispielen, sowie aus den Unteransprüchen. Es zeigt:

Fig. 1      ein Übersichtsbild einer Motoranordnung mit elektronischer Kommutierung,

Fig. 2      eine schematische Darstellung zur Erläuterung der Wirkungsweise der Anordnung gemäß Fig. 1 bei hohen Drehzahlen,

Fig. 3      eine schematische Darstellung zur Erläuterung der Wirkungsweise der Anordnung gemäß Fig. 1 bei niederen Drehzahlen,

Fig. 4      ein erstes Ausführungsbeispiel eines ECM nach der Erfindung,

Fig. 5      eine stark schematisierte Darstellung des Verlaufs der Signale S31, S33 und $u_C$ beim Motor der Fig. 4,

Fig. 6      ein zweites Ausführungsbeispiel der Erfindung, bei welchem der ECM von einem µC 27 gesteuert wird, der Signale S31 und S33 für die Kommutierung des Motors liefert und der auch den zulässigen Höchstwert des Stromes I im Motor abhängig von mindestens einem Parameter beeinflusst,

Fig. 7      ein erstes Schaubild zur Erläuterung von Fig. 6,

Fig. 8      ein zweites Schaubild zur Erläuterung von Fig. 6,

Fig. 9      ein Schaubild zur Erläuterung der Kommutierung und der Erzeugung von Impulsen 84 mit erhöhter Frequenz, welche die Strombegrenzung beeinflussen, und

Fig. 10     ein Flussdiagramm zur Erläuterung von Fig. 9.

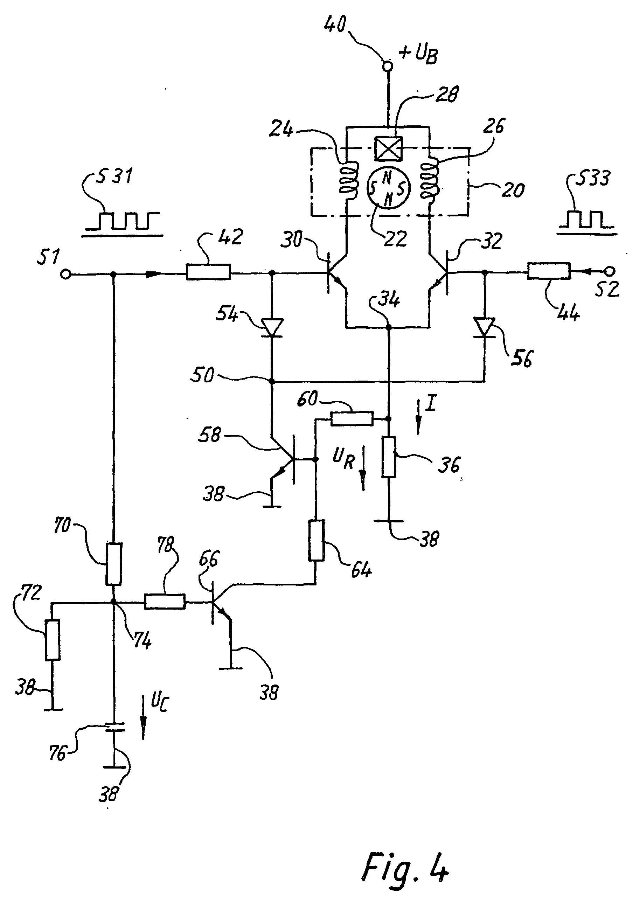

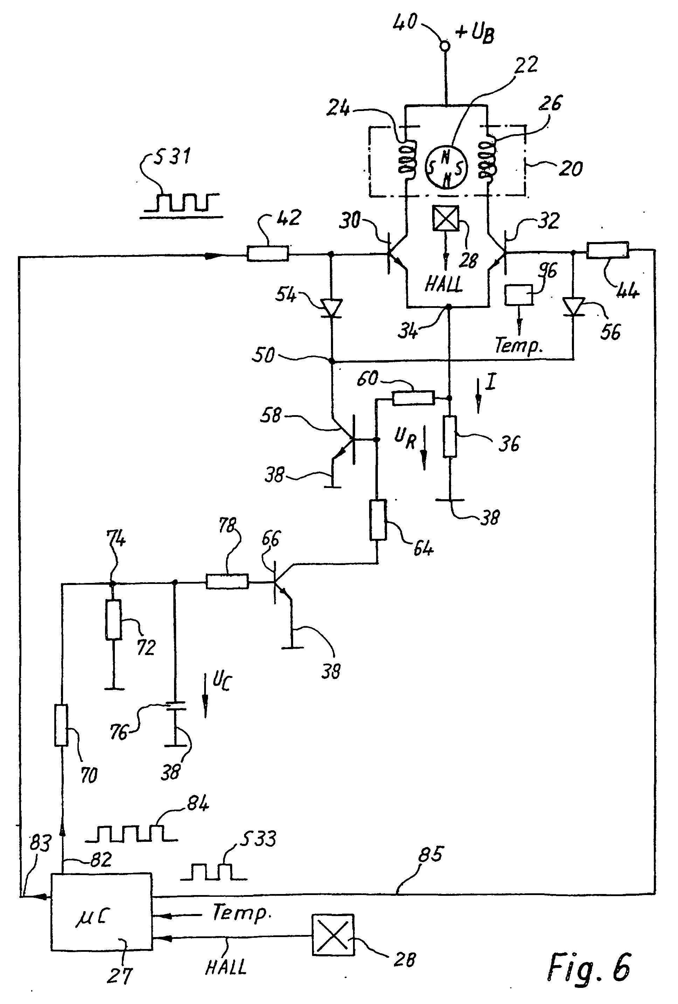

In den nachfolgenden Figuren werden gleiche oder gleich wirkende Teile jeweils mit denselben Bezugszeichen bezeichnet und gewöhnlich nur einmal beschrieben. Dies gilt besonders für die identischen Bauelemente in den Fig. 4 und 6.

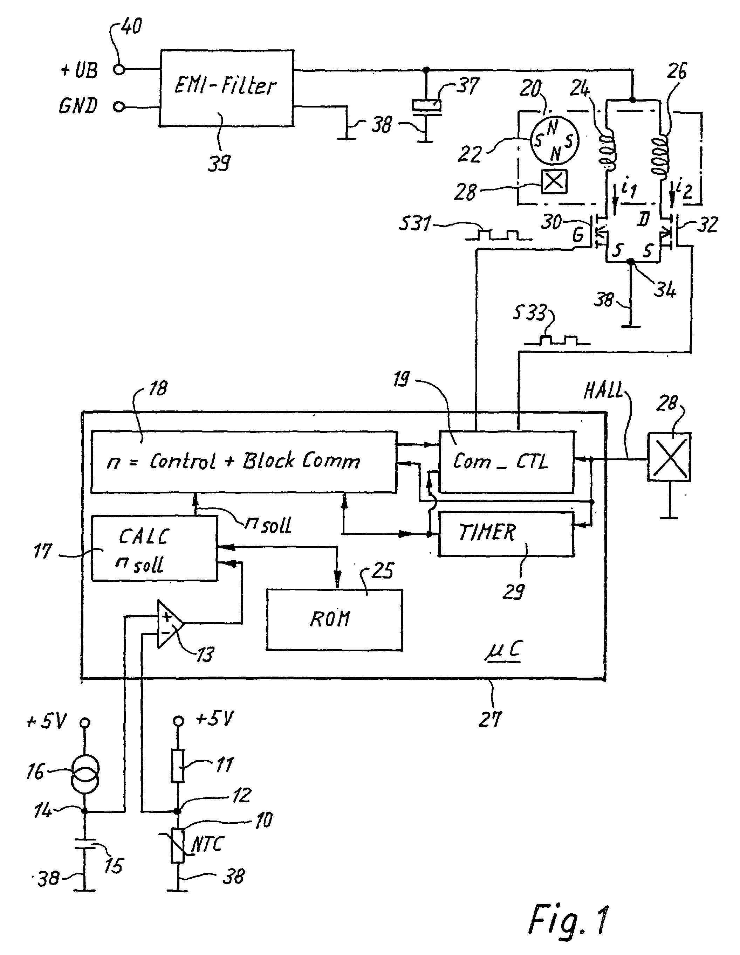

**Fig. 1** zeigt ein Übersichtsbild eines elektronisch kommutierten Motors (ECM) 20, wie er in seinem grundsätzlichen Aufbau aus der EP 0 567 989 B1 (EP-3008) bekannt ist. Dieser kann z.B. zum Antrieb eines Lüfters dienen, dessen Drehzahl von einem temperaturabhängigen NTC-Widerstand 10 gesteuert wird, welcher in Reihe mit einem Widerstand 11 an einer konstanten Spannung von 5 V liegt. Der Verbindungspunkt 12 der Widerstände 10, 11 ist mit dem Minuseingang eines Komparators 13 verbunden, dessen Pluseingang mit einem Knotenpunkt 14 verbunden ist, der über einen Kondensator 15 mit Masse 38 und über ein Konstantstromglied 16 mit +5 V verbunden ist. Bei einer niedrigen Temperatur des NTC-Widerstands 10 läuft ein solcher Lüfter langsam und braucht dafür wenig Strom, und bei einer hohen Temperatur läuft er schnell und braucht dann viel Strom.

Der Kondensator 15 wird über das Konstantstromglied 16 linear geladen, und wenn das Potenzial am Punkt 14 das Potenzial am Punkt 12 überschreitet, gibt der Komparator 13 ein Signal an ein Sollwert-Berechnungsglied CALC $n_{soll}$ 17, das einen Sollwert $n_{soll}$ für die Drehzahl berechnet, z.B. 1500 U/min bei niedrigen Temperaturen, 3000 U/min bei hohen Temperaturen, und Zwischenwerte bei den dazwischen liegenden Temperaturen.

Auf diese Weise wird bei einem Lüfter die geförderte Luftmenge an die Temperatur des zu kühlenden Geräts angepasst Naturgemäß kann die gewünschte Drehzahl $n_{soll}$ beim Motor 20 auf beliebige andere Weise gesteuert werden, z.B. durch ein von außen direkt zugeführtes elektrisches Signal $n_{soll}$.

Der im Berechnungsglied 17 berechnete Sollwert $n_{soll}$ wird einem Regler 18 zugeführt, der hier ein Drehzahlregler ist, aber auch ein Drehmomentenregler sein könnte. Dieser erzeugt Vorgabewerte für eine sogenannte Blockkommutierung, die nachfolgend anhand der Fig. 2 und 3 erläutert wird.

Die Signale vom Regler 18 werden einer Kommutierungssteuerung COMM_CTL 19 zugeführt, und diese steuert den elektronisch kommutierten Motor 20, der nur schematisch dargestellt ist. Er hat einen - vierpolig dargestellten - permanentmagnetischen Rotor 22, zwei Wicklungsstränge 24, 26 und einen vom Magnetfeld des Rotors 22 gesteuerten Hallgenerator 28 als Rotorstellungssensor. Dieser ist in Fig. 1 rechts oben und rechts in der Mitte zwei Mal dargestellt.

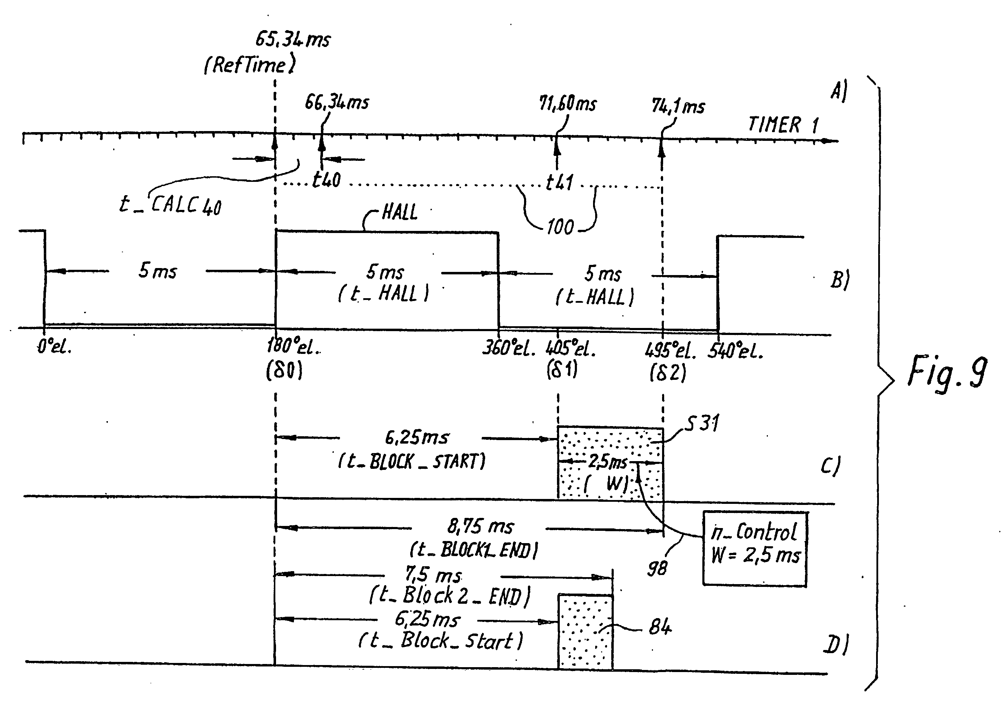

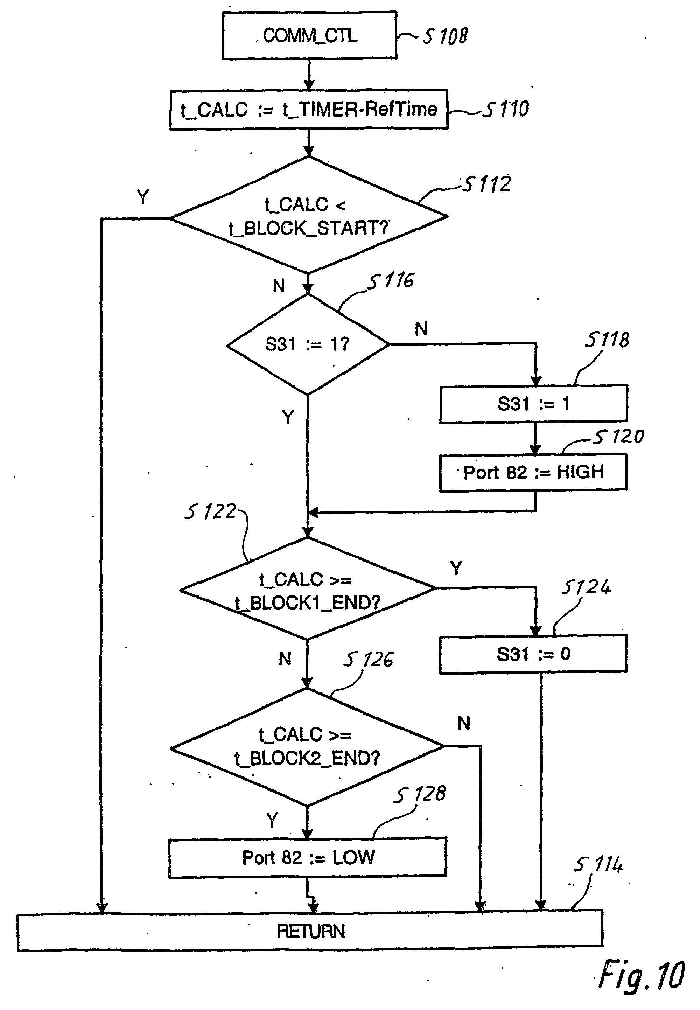

Das Ausgangssignal HALL des Hallgenerators 28, das in Fig. 9A dargestellt ist, wird gemäß Fig. 1 der Kommutierungssteuerung 19 zugeführt, ferner dem Drehzahlregler 18, der daraus die tatsächliche Drehzahl berechnet, und einem Timer 29, der u.a. die Zeitpunkte ermittelt, an denen sich das Signal HALL ändert, wie nachfolgend bei Fig. 9 und 10 beschrieben.

Wie dargestellt, sind die verschiedenen Module 13,17,18,19,21,29, sowie ein ROM 25 (mit dem in Fig. 10 dargestellten Programm sowie Programmteilen für die Regelung der Drehzahl), Bestandteile eines Mikrocontrollers (µC) 27, in welchem die verschiedenen Rechenvorgänge für die Regelung etc. durchgeführt werden, wie z.B. in der EP 0 567 989 B1 ausführlich beschrieben.

Der Motor 20 kann z.B. ein Motor gemäß der EP 0 908 630 A1, oder dem DE 295 01 695.7 U1, oder dem DE 8 702 271.0 U1 sein, und er kann statt zwei Strängen 24, 26 auch nur einen Strang oder mehr als zwei Stränge haben. Seine Kommutierung kann statt durch einen Hallgenerator 28 z.B. auch durch die in den Strängen der Statorwicklung induzierten Spannungen gesteuert werden, wie beispielhaft in der EP 1 107 441 A2 dargestellt. Auch ist ein Betrieb mittels einer Vollbrückenschaltung möglich. Der dargestellte Motor dient also nur dazu, die Erfindung an einem einfachen Beispiel in leicht verständlicher Weise zu erläutern.

Der Strang 24 liegt bei diesem Beispiel in Serie mit einem N-Kanal-MOSFET-Transistor 30, und der Strang 26 liegt in Serie mit einem MOSFET-Transistor 32. Diese Transistoren können auch bipolare Transistoren sein, wie in den nachfolgenden Ausführungsbeispielen beschrieben. Die Source-Anschlüsse der Transistoren 30, 32 sind über einen Knotenpunkt 34 mit Masse 38 verbunden. Der Drain des MOSFET 30 ist über den Strang 24 und ein EMI-Filter 39 mit einem positiven Anschluss 40 verbunden. Ebenso ist der Drain des MOSFET 32 über den Strang 26 und das Filter 39 mit dem Anschluss 40 und der dortigen positiven Spannung $+U_B$ verbunden. Ein Kondensator 37 dient als Siebglied.

**Fig. 2** zeigt schematisch die Signalformen bei einer Motordrehzahl von 3000 U/min.

In Zeile a) sind die blockförmigen Steuersignale S31 dargestellt, die von der Kommutierungssteuerung 19 dem Gate des MOSFET 30 zugeführt werden, und Fig. 2b zeigt die blockförmigen Signale S33, die dem Gate des MOSFET 32 zugeführt werden. Da der Motor 20 bei dieser Drehzahl eine hohe Leistung benötigt, ist das Tastverhältnis der Signale S31 und S33 groß. Dieses Tastverhältnis ist definiert als das Verhältnis der Blocklänge W zur Periodendauer T, die der Rotor 22 für eine Drehung von 360° el. benötigt und die bei einem vierpoligen Rotor 22 der Hälfte der Zeit entspricht, die dieser Rotor für eine volle Umdrehung benötigt. Es gilt also

$$\text{Tastverhältnis der Blocksignale} = W/T \tag{1}$$

Z.B. benötigt ein vierpoliger Rotor 22 bei 3000 U/min 20 ms für eine volle Umdrehung, also 10 ms für eine Umdrehung von 360° el., so dass bei dieser Drehzahl der Wert W zwischen 0 und 5 ms liegt. Die blockförmigen Signale S31 steuern den Strom $i_1$ im Strang 24, und die Signale S33 den Strom $i_2$ im Strang 26. Z.B. schaltet der Beginn t1 des blockförmigen Signals S31 den Strom $i_1$ ein, und das Ende t2 des Signals S31 schaltet den Strom $i_1$ aus, der dann infolge der Induktivität des Strangs 24 im Anschluss an den Zeitpunkt t2 abklingt. Hierfür sind in die Transistoren 30, 32 entsprechende Freilaufdioden integriert. -- Wie die Fig. 2c und 2d zeigen, haben die Ströme $i_i$ und $i_2$ eine Form mit relativ niedriger Amplitude, da bei 3000 U/min die Spannung hoch ist, die durch den Rotor 22 in den Strängen 24, 26 induziert wird und die man als Gegen-EMK bezeichnet.

Völlig anders sind die Verhältnisse bei einer niedrigen Drehzahl von 1500 U/min, wie sie in **Fig. 3** dargestellt sind.

Die blockförmigen Signale sind ebenfalls mit S31 und S33 bezeichnet und haben ein sehr niedriges Tastverhältnis W/T, also praktisch die Form von Nadelimpulsen, da bei diesen Drehzahlen der Leistungsbedarf des Motors 20 klein ist.

Da bei diesen Drehzahlen die Gegen-EMK niedrig ist, haben diese kurzen blockförmigen Signale Ströme $i_1$, $i_2$ zur Folge, wie sie in Fig. 3c und 3d dargestellt sind. Das sind sehr kurze Ströme mit sehr hohen Amplituden, und diese nadelförmigen Ströme regen den Motor 20 zu Schwingungen an, z.B. durch magnetostriktive Effekte. Diese Form von kurzen Stromimpulsen mit hoher Amplitude ist deshalb für ein kommerzielles Produkt ungünstig.

Die vorliegende Erfindung befasst sich u.a. mit dem Problem dieser nadelförmigen Ströme, wie sie in Fig. 3c und 3d dargestellt sind und wie sie vor allem beim Betrieb mit niedrigen Drehzahlen auftreten, wo diese Impulse durch ihre niedrige Frequenz besonders störend wirken.

**Fig. 4** zeigt ein erstes Ausführungsbeispiel einer Anordnung zur Ausführung eines Verfahrens nach der Erfindung. Der Strang 24 liegt bei diesem Beispiel in Serie mit einem npn-Transistor 30, und der Strang 26 liegt in Serie mit einem npn-Transistor 32. Die Emitter der Transistoren 30, 32 sind mit dem Knotenpunkt 34 verbunden, und dieser ist über einen als Messglied dienenden gemeinsamen Emitterwiderstand 36 mit Masse 38 verbunden. Durch den Widerstand 36 fließt also der Motorstrom I, und dieser erzeugt am Widerstand 36 einen Spannungsabfall $u_R$. Der Kollektor des Transistors 30 ist über den Strang 24 mit dem positiven Anschluss 40 verbunden. Ebenso ist der Kollektor des Transistors 32 über den Strang 26 mit dem Anschluss 40 und der dortigen positiven Spannung $+U_B$ verbunden.

Die Basis des Transistors 30 erhält über einen Basiswiderstand 42 Steuerimpulse S31 von einem Eingang S1, und ebenso erhält die Basis des Transistors 32 über einen Widerstand 44 Steuerimpulse S33 von einem Eingang S2. Die Steuerimpulse S31, S33 sind gemäß Fig. 2, 3 und 5 phasenverschoben und steuern in bekannter Weise die Kommutierung des Motors 20, wobei angestrebt wird, dass niemals beide Transistoren 30, 32 gleichzeitig leitend sind. Gemäß Fig. 1 werden die Impulse S31, S33 bevorzugt vom µC 27 geliefert. Ihre Blocklänge W ist, wie beschrieben, variabel und wird durch den Blockregler 18 bestimmt.

Mit einem Knotenpunkt 50 sind die Katoden von zwei Dioden 54, 56 verbunden. Die Anode der Diode 54 ist mit der Basis des Transistors 30, die der Diode 56 mit der Basis des Transistors 32 verbunden. Mit dem Knotenpunkt 50 ist auch der Kollektor eines npn-Transistors 58 verbunden, dessen Emitter an Masse 38 liegt. Wenn der Transistor 58 partiell leitend ist, und es kommt ein positiver Impuls S31 zur Basis des Transistors 30, so fließt ein Teil dieses Impulses S31 über die Diode 54 und den Transistor 58 nach Masse, abhängig davon, wie groß die Leitfähigkeit des Transistors 58 ist. Auf diese Weise kann also die Amplitude der Signale S31 und S33 dadurch gesteuert werden, dass man die Leitfähigkeit des Transistors 58 entsprechend verändert. Ist dieser voll leitend, so sperrt er beide Transistoren 30 und 32, und der Motorstrom I wird zu Null. Ist der Transistor 58 voll gesperrt, so beeinflusst er den Motorstrom I überhaupt nicht.

Während bei der dargestellten Lösung mit bipolaren Transistoren 30, 32 die Wirkung des Transistors 58 darauf beruht, dass die Transistoren 30, 32 im sogenannten linearen Bereich betrieben werden, also als variable Widerstände, und ihnen über den Transistor 58 ein Teil des Basisstroms entzogen wird, wird bei Verwendung von MOSFET-Transistoren, wie sie in Fig. 1 dargestellt sind, diesen ein Teil der Gatespannung entzogen. Diese nicht dargestellte Variante ist für den Fachmann ohne weiteres realisierbar.

Die Basis des Transistors 58 ist über einen Widerstand 60 mit dem Knotenpunkt 34 verbunden, d.h. dieser Basis wird die Spannung $u_R$ am Messwiderstand 36 zugeführt. Dies bedeutet, dass bei ansteigendem Motorstrom I, also einem Anstieg der Spannung $U_R$, der Transistor 58 stärker leitend wird und folg!ich ein größerer Teil des Basisstroms der Transistoren 30 und 32 über ihn nach Masse 38 fließt, was den Motorstrom I nach oben auf einen Vorgabewert begrenzt.

Die Basis des Transistors 58 ist über einen Widerstand 64 mit dem Kollektor eines npn-Transistors 66 verbunden, dessen Emitter mit Masse 38 verbunden ist. Wenn dieser Transistor 66 leitend wird, reduziert er den Basisstrom des Transistors 58, so dass dieser erst bei einem höheren Motorstrom I leitend wird. Auf diese Weise kann also in einfacher Weise der Vorgabewert nach oben verschoben werden, bei dem die Strombegrenzung einsetzt. Ist der Transistor 66 voll leitend, so sperrt er den Transistor 58, so dass keine Strombegrenzung stattfindet. Ist der Transistor 66 voll gesperrt, so erhält der Transistor 58 den vollen Basisstrom, der ihm über den Widerstand 60 zugeführt wird, und der Motorstrom I wird auf einen niedrigen Wert begrenzt.

Man kann also den Transistor 66 entweder im linearen Bereich betreiben, also als variablen Widerstand, oder im Aus-Ein-Betrieb (Schaltbetrieb), sofern er z.B. über ein PWM-Signal angesteuert wird.

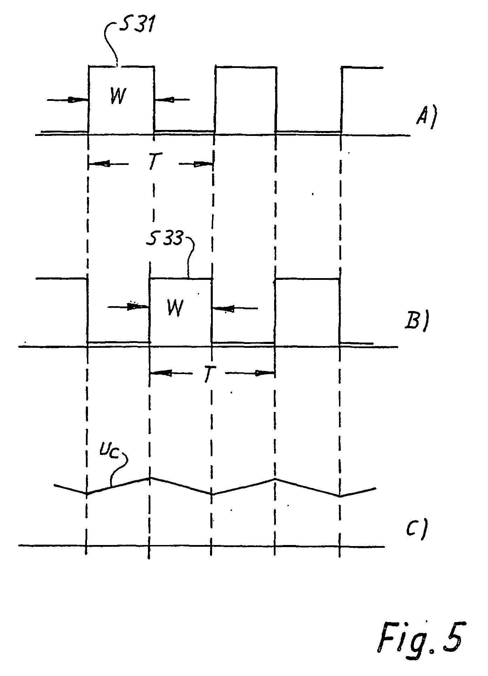

Bei der Variante nach Fig. 4 wird der Transistor 66 von einem Signal $u_C$ gesteuert, das vom Steuersignal S31 abgeleitet ist. Letzteres liegt an einem Spannungsteiler, der von zwei Widerständen 70, 72 gebildet wird, deren Verbindungspunkt 74 über einen Kondensator 76 mit Masse 38 und über einen Widerstand 78 mit der Basis des Transistors 66 verbunden ist. Die Widerstände 70, 78 und der Kondensator 76 wirken als Sieb- oder Integrierglied für die Impulse S31, so dass man am Kondensator 76 eine geglättete Spannung $u_C$ erhält, die in Fig. 5C dargestellt ist. Diese Spannung ist abhängig vom Tastverhältnis W/T der Impulse S31, d.h. wenn W/T kleiner wird, sinkt auch $u_C$, und umgekehrt.

Die Blocklänge W der Impulse S31, S33 wird vom Regler 18 vorgegeben. Sie ist abhängig von der Belastung des Motors. Bei höheren Drehzahlen benötigt der Motor eine höhere Leistung, weshalb mit zunehmender Drehzahl das Tastverhältnis W/T (vgl.

Gleichung 1) zunimmt und $u_C$ ansteigt, der Transistor 66 folglich stärker leitend wird, den Basisstrom des Transistors 58 stärker reduziert und dadurch den Vorgabewert, ab dem die Strombegrenzung einsetzt, nach oben verschiebt, bis letztere bei hohen Drehzahlen ganz abgeschaltet wird, um den Betrieb des Motors 20 mit seiner maximalen Leistung zu ermöglichen. Wenn der Transistor 66 voll leitet, ist die Strombegrenzung deaktiviert. Über das Verhältnis der Widerstände 70 und 72 kann die Spannung $u_C$ am Kondensator 76 verändert werden, und dadurch kann der Wert von W/T festgelegt werden, bei dem die Anhebung der Stromgrenze beginnt.

Bei der Anordnung nach Fig. 4 ist der Kondensator 76 so dimensioniert, dass an ihm im Betrieb eine Spannung $u_C$ entsteht, die nur sehr wenig schwankt. (In Fig. 5c sind die Schwankungen von $u_C$ stark übertrieben dargestellt.) Diese Dimensionierung des Kondensators 70 hat zur Folge, dass die Spannung $u_C$ an ihm nur mit einer gewissen zeitlichen Verzögerung einer Änderung von Frequenz und/oder Tastverhältnis des Signals S31 folgen kann.

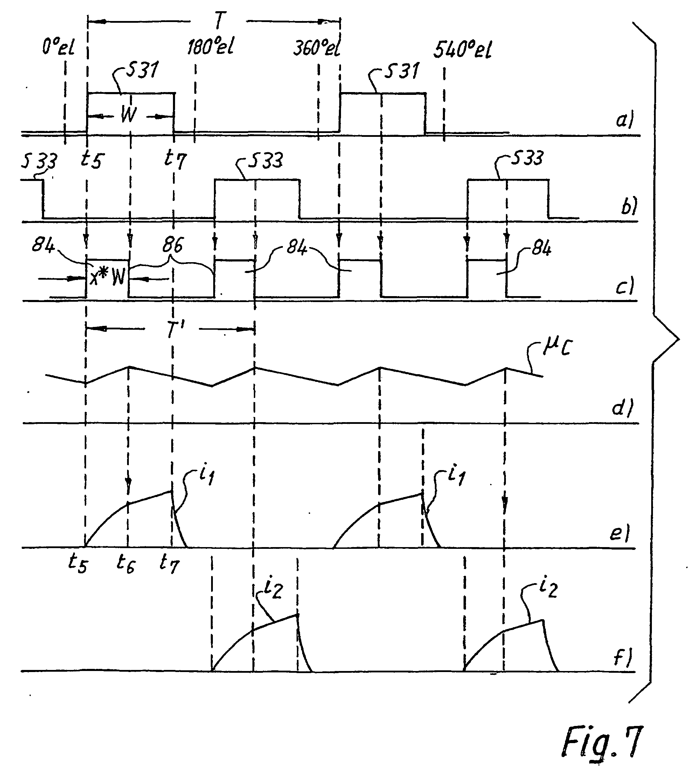

Bei der Variante nach **Fig. 6** wird dem µC 27 ebenso wie bei Fig. 1 als drehzahlabhängiges Signal das Signal HALL des Hallgenerators 28 zugeführt. Ebenso wie in Fig. 1 liefert der µC 27 an einem Ausgang 83 das Signal S31 und an einem Ausgang 85 das Signal S33. Die Signale S31, S33 dienen zur Steuerung der Transistoren 30 und 32. Ferner wird an einem Ausgang (Port) 82 des µC 27 ein impulsförmiges Signal 84 ausgegeben, das die doppelte Frequenz des Signals S31 und eine ähnliche Form wie dieses hat und das in Fig. 7c dargestellt ist. Fig. 7a zeigt das Signal S31, Fig. 7b das Signal S33. Die Signale S31, S33 haben dieselbe Impulsbreite W, dieselbe Frequenz, und folglich dasselbe Tastverhältnis W/T. Das Signal 84 hat eine kleinere Impulsbreite. Es gilt

$$\text{Impulsbreite des Signals } 84 = X * W \qquad (2)$$

Diese Impulsbreite beträgt bevorzugt etwa 50 % von W, d.h. das Tastverhältnis und damit der Informationsgehalt des Signals 84 ist bevorzugt etwa dasselbe wie bei den Signalen S31 und S33, aber seine Frequenz ist doppelt so hoch, oder ggf. auch viermal so hoch.

Der Beginn eines Impulses S31 fällt bevorzugt zusammen mit dem Beginn eines Impulses 84, und ebenso fällt bevorzugt der Beginn eines Impulses S33 zusammen mit dem Beginn eines anderen Impulses 84. Dies ist in den Fig. 9 und 10 an einem Beispiel näher erläutert.

Da im Regler 18 (Fig. 1) die Blocklänge W für die Signale S31 und S33 ständig neu berechnet wird, kann dort auch die reduzierte Blocklänge X * W der Impulse 84 sehr einfach berechnet werden, z.B. durch Division mit 2. Deshalb kann das Signal 84 durch den µC 27 sehr einfach erzeugt werden.

Wie Fig. 6 zeigt, wird das Signal 84 durch den Spannungsteiler 70, 72 in seiner Amplitude reduziert. Dieser Spannungsteiler 70, 72 ermöglicht es also, das Einsetzen des Stromes durch den Transistor 66 festzulegen.

Gemäß Fig. 7d erhält man am Kondensator 76 der Fig. 6 eine fluktuierende Gleichspannung uc, deren Amplitude mit einer Frequenz schwankt, die doppelt so groß ist wie bei Fig. 5. Deshalb werden die Ströme $i_1$ und $i_2$ (Fig. 7e und 7f) in exakt derselben Weise durch die Strombegrenzung beeinflusst, d.h. während eines Impulses 84 steigt die Spannung $u_C$ an und erhöht dadurch die Stromgrenze, und im Intervall 86 zwischen zwei aufeinanderfolgenden Impulsen 84 sinkt die Spannung $u_C$, wodurch dort die Stromgrenze sinkt.

Dadurch wird es möglich, die einzelnen Stromimpulse $i_1$, $i_2$ individuell zu formen, d.h. in Fig. 7c steigt der Strom $i_1$ zwischen den Zeitpunkten t5 und t6 stark an, und danach zwischen t6 und t7 weniger stark, weil dort die Stromgrenze abnimmt. Durch Wahl des Kondensators 76 der Fig. 6 lässt sich in Fig. 7d die Größe der Fluktuation (ripple) des Signals $u_C$ einstellen, d.h. wenn ein kleiner Kondensator 76 verwendet wird, wird diese Fluktuation groß, und man erhält eine entsprechend große Schwankung der Stromgrenze im Verlauf eines Stromimpulses.

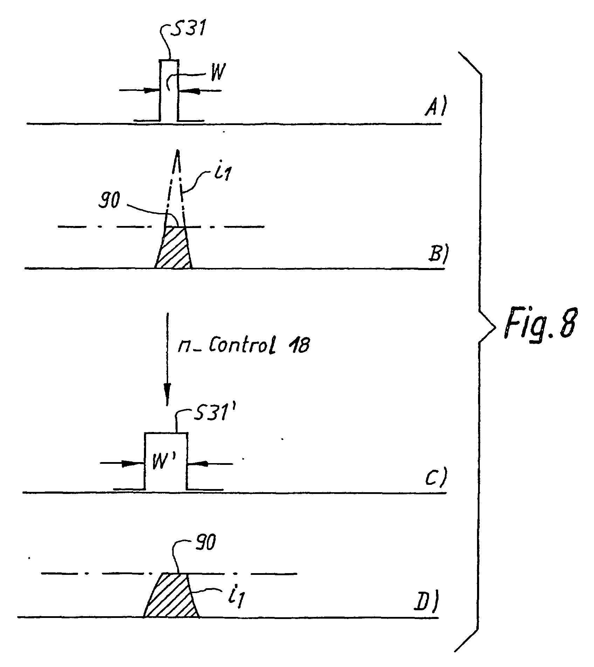

**Fig. 8** zeigt, was bei einem schmalen Impuls S31 (Fig. 8A) geschieht, wie er auch in Fig. 3 dargestellt ist. Dieser Steuerimpuls S31 hätte an sich einen Nadelimpuls $i_1$ (Fig. 8B) zur Folge, aber in einem solchen Fall wird $u_C$ (Fig. 6 & 7) praktisch zu Null, d.h. der Transistor 66 wird gesperrt, und die Strombegrenzung durch den Transistor 58 wird voll wirksam, so dass der nadelförmige Stromimpuls $i_1$ an der Stelle 90 gekappt wird.

Dadurch erhält der Motor 20 weniger Energie, und seine Drehzahl sinkt unter den eingestellten Sollwert. Der Regler n-Control 18 (Fig. 1) bewirkt deshalb eine Vergrößerung der Impulsbreite von W (Fig. 8A) auf W' (Fig. 8C), wodurch der gekappte Stromimpuls $i_1$ entsprechend verbreitert wird, vgl. Fig. 8D. Auf diese Weise erhält man statt eines kurzen Nadelimpulses gemäß Fig. 8B einen Impuls gemäß Fig. 8D mit niedriger Amplitude, aber vergrößerter Breite. Es ist so, als hätte man mit elektronischen Mitteln diesen spitzen Nadelimpuls "breit geklopft", indem man ihn von der Form gemäß Fig. 8B in die Form gemäß Fig. 8D transformiert. Hierdurch werden die Geräusche des Motors stark reduziert, und sein Wirkungsgrad wird besser, da die Stromverluste besonders bei niedrigen Drehzahlen abnehmen. Wie Fig. 7 und 9 zeigen, werden die Steuerimpulse S31, S33 bevorzugt so gelegt, dass sie den Strom im Maximum der induzierten Spannung einschalten, da sich hierdurch ein guter Wirkungsgrad ergibt. Bei höheren Drehzahlen können die Steuerimpulse etwas nach früh verschoben werden, um den Wirkungsgrad des Motors zu verbessern. Dies wird nachfolgend bei Fig. 9 erläutert.

Die Temperatur Temp der Transistoren 30, 32 kann mit einem Sensor 96 erfasst werden und wird dann ebenfalls dem μC 27 zugeführt. Wenn diese Temperatur zu hoch wird, wird der Transistor 66 stärker oder auch vollständig leitend gemacht, so dass die Strombegrenzung weniger oder gar nicht wirksam ist, die Transistoren 30, 32 nicht mehr als Widerstände betrieben werden, sondern im eingeschalteten Zustand voll leiten und deshalb wieder kälter werden. Dies kann z.B. in der Weise geschehen, dass der Faktor X (Gleichung 2) größer gemacht wird. Diesen Faktor kann man z.B. abhängig von der Temperatur Temp einer Tabelle im ROM 25 entnehmen. Dadurch kann man die maximale Temperatur der Transistoren 30, 32 in der gewünschten Weise beeinflussen.

Bei einem Motor, der einen durch die Umgebungstemperatur gesteuerten Lüfter antreibt, bedeutet eine niedrige Umgebungstemperatur eine niedrige Motordrehzahl. Bei niedrigen Temperaturen können die Transistoren 30, 32 thermisch stärker belastet werden, indem sie als Widerstände betrieben werden, was eine erhöhte Verlustleistung in diesen Transistoren bedeutet. Deshalb kann man in diesem Fall bei niederen Drehzahlen die Transistoren im sogenannten "linearen Betrieb" betreiben, nämlich als variable Widerstände, während man sie bei hohen Drehzahlen - entsprechend hohen Umgebungstemperaturen - bevorzugt im sogenannten "Schaltbetrieb" betreibt, bei dem die Transistoren mit niederen Verlusten arbeiten.

Dem μC 27 kann auch ein Signal zugeführt werden, welches die Höhe der Betriebsspannung $U_B$ angibt, die bei batteriebetriebenen Motoren in weiten Grenzen schwanken kann. Bei einer hohen Betriebsspannung kann man den Wert für die Strombegrenzung entsprechend erhöhen, indem durch Vergrößerung des Faktors X (Gleichung 2) der Transistor 66 stärker oder voll leitend gemacht wird.

Sofern bei einem Motor bei bestimmten Drehzahlen Resonanzprobleme auftreten, ist es wünschenswert, diese Drehzahlbereiche rasch zu durchlaufen. In diesem Fall wird bei der betreffenden Drehzahl die Strombegrenzung deaktiviert, so dass dieser Drehzahlbereich mit maximaler Leistung durchlaufen wird.

Durch die Anpassung der Stromgrenze im Betrieb, wie sie in Fig. 7 dargestellt ist, kann die Kommutierung, also die Änderungsgeschwindigkeit du/dt und di/dt an den Transistoren 30 und 32, und damit das Verhalten des Motors 20 im Betrieb, nach Wunsch und sozusagen maßgeschneidert verändert werden.

**Fig. 9** zeigt das Prinzip der Kommutierung im Bereich des Maximums der induzierten Spannung, das auch als "Mittenkommutierung" bezeichnet wird, und die Erzeugung des Signals 84. Die Anordnung beruht auf einer Zeitmessung mittels des Timers 29 im μC 27. Dieser Timer misst fortlaufend die Zeit, wie in Fig. 9A symbolisch dargestellt.

Der Hallgenerator 28 erzeugt während der Drehung des Rotors 22 das Signal HALL, das z.B. bei 0° el. den Wert LOW annimmt, bei 180° el. den Wert HIGH, und bei 360° el. wieder zu LOW wird. Dieses Signal ist in Fig. 9B dargestellt.

Bei einer Änderung des Signals HALL von LOW auf HIGH wird eine Referenzzeit RefTime gemessen, bei dem Beispiel gemäß Fig. 9 z.B. die Zeit 65,34 ms. Diese Zeit dient als Bezugspunkt für die nachfolgenden Berechnungen. Die Referenzzeiten bei einer Änderung des Signals HALL von LOW auf HIGH dienen zur Steuerung des Stromes $i_1$, und die Referenzzeiten bei der Änderung des Signals HALL von HIGH auf LOW dienen zur Steuerung des Stromes $i_2$. Fig. 9 zeigt an einem Beispiel die Steuerung des Stromes $i_1$; die Steuerung des Stromes $i_2$ erfolgt in völlig analoger Weise.

Vom Regler n-Control 18 (Fig. 1) wird eine bestimmte Blocklänge W berechnet, und diese soll bei diesem Beispiel W = 2,5 ms betragen. Die Länge eines Blocks 84 beträgt dann z.B. die Hälfte hiervon, also W/2 = 1,25 ms.

Fig. 9 zeigt ein Zahlenbeispiel für eine Drehzahl von n = 3000 U/min und einen vierpoligen Rotor 22. In diesem Fall gilt

$$t\_HALL = 60/(3000 * 4) = 0,005 \text{ s} = 5 \text{ ms} \tag{3}$$

Dies ist die Zeit, die der Rotor 22 bei 3000 U/min für eine Drehung von 180° el. benötigt, also für eine Viertels-Umdrehung.

Auf Grund der Zeit t_HALL und der Zeit W werden verschiedene Zeiten berechnet wie folgt:

$$t\_BLOCK\_START = t\_HALL + (t\_HALL - W)/2 \tag{4}$$

$$t\_BLOCK1\_END = t\_BLOCK\_START + W \tag{5}$$

$$t\_BLOCK2\_END = t\_BLOCK\_START + X * W \tag{6}$$

In Fig. 9 ist z.B., wie in der Zeichnung angegeben,

| t_BLOCK_START | = 6,25 ms, |
|---|---|
| t_BLOCK1_END | = 8,75 ms, und |
| t_BLOCK2_END | = 7,5 ms, |

wobei X = 0,5 angenommen ist.

Aus den berechneten Werten weiß man bei diesem Beispiel prognostisch, dass, ausgehend von der Referenzzeit RefTime entsprechend dem Winkel $\partial 0$, nach einer Zeit von 6,25 ms die Drehstellung $\partial 1$ (405° el.) erreicht sein wird, an der der Strom $i_1$ eingeschaltet werden muss. Ebenso weiß man prognostisch, dass nach einer Zeit von 8,75 ms die Drehstellung $\partial 2$ (495° el.) erreicht sein wird, an der der Strom $i_1$ abgeschaltet werden muss.

Ferner zeigt Fig. 9 als Beispiel, dass im Timer 29 zum Referenzzeitpunkt RefTime $\partial 0$ (180° el.) eine Referenzzeit von 65,34 ms gemessen wurde.

Zur Überwachung des Einschaltens bei $\partial 1$ und des Ausschaltens bei $\partial 2$ geht man so vor, dass man fortlaufend die zeitliche Differenz t_CALC zwischen dem augenblicklich gemessenen Zeitpunkt t_TIMER und den 65,34 ms bildet. Die Gleichung hierfür lautet

$$t\_CALC = t\_TIMER - RefTime \tag{7}$$

Wenn z.B. zum Zeitpunkt t40 vom Timer 29 eine Zeit von 66,34 ms gemessen wird, so ergibt sich als Differenz $t\_CALC_{40}$ = 66,34 - 65,34 = 1 ms.

Da der Strom $i_1$ erst nach einer Zeit von 6,25 ms eingeschaltet werden muss, sind 1 ms zu wenig, und der Strom $i_1$ wird noch nicht eingeschaltet.

Beträgt zum Zeitpunkt t41 die aktuelle Zeit im Timer 29 71,60 ms, so ergibt sich als Differenz $t\_CALC_{41}$ = 71,60 - 65,34 = 6,26 ms.

In diesem Fall wird zum Zeitpunkt t41 der Strom $i_1$ eingeschaltet, da $t\_CALC_{41}$ größer als 6,25 ms ist. Ebenso wird in diesem Fall ein Impuls 84 gestartet.

Ab der Drehstellung $\partial 0$ wird also ständig überwacht, ob t_CALC größer oder gleich t_BLOCK_START geworden ist, und wenn dies der Fall ist, wird in Fig. 6 der Transistor 30 eingeschaltet und ein Impuls 84 wird erzeugt.

Die Abschaltung erfolgt nach dem gleichen Prinzip, nur dass t_CALC mit der Größe t_BLOCK1_END verglichen wird. In Fig. 9 beträgt diese Größe 8,75 ms. Sie entspricht dem Abschaltwinkel $\partial 2$, und wenn sie erreicht ist, wird der Transistor 30 abgeschaltet. Ebenso wird der Ausgang (Port) 82 wieder auf 0 geschaltet, wenn die Zeit t_BLOCK2_END erreicht ist, also in diesem Fall die Zeit von 7,5 ms.

Kommutierung, und Erzeugung des Signals 84, beruhen darauf, dass in kurzen Abständen von z.B. 0,1 ms die Zeit t_CALC neu berechnet und mit den zuvor gemäß den Gleichungen (4) bis (6) vorausberechneten Werten t_BLOCK_START etc. verglichen wird. Dies geschieht in Fig. 9A zwischen den Zeiten 65,34 ms und 74,1 ms und ist durch Punkte 100 angedeutet. Dabei geht man für jeden Stromblock von einem diesem zugeordneten Referenzwinkel aus, an dem man eine Referenzzeit RefTime für diesen Stromblock misst, die dann bei den Vergleichen (gemäß Gleichung 7) verwendet wird. Bei der Drehung des Rotors 22 werden also ständig neue Referenzzeiten ermittelt und neue Vergleiche vorgenommen, um die Ströme $i_1$ und $i_2$ durch die Wicklungen 24 und 26 richtig zu steuern, d.h. die Referenzwinkei "wandern" mit der Drehung des Rotors 22 mit.

Soll der Strom um eine Zeit ZV = 0,4 ms früher eingeschaltet werden, was man auch als "Frühzündung" bezeichnet (obwohl nichts gezündet wird), so verwendet man in Fig. 9 statt der Zeit 6,25 ms für das Einschalten eine Zeit von        6,25 - 0,4 = 5,85 ms,

für das Ausschalten eine Zeit von        8,75 - 0,4 = 8,35 ms,

und für das Ende des Signals 84 eine Zeit von        7,50 - 0,4 = 7,10 ms.

Der Winkel ∂1 verschiebt sich dann bei dieser Drehzahl um 14,4° el. nach links auf 390,6° el., und der Winkel ∂2 verschiebt sich ebenfalls um 14,4° el. nach links auf 480,6° el., d.h. der Strom $i_1$ wird zeitlich früher ein- und ausgeschaltet, und der Winkel, um den früher ein- und ausgeschaltet wird, nimmt mit steigender Drehzahl zu und beträgt hier bei 3000 U/min 14,4° el., bei 6000 U/min 28,8° el., etc. Meist wird ZV eine Funktion der Drehzahl sein. Dieses frühere Ein- und Ausschalten der Ströme in den Wicklungen 24 und 26 kann den Wirkungsgrad des Motors 20 bei höheren Drehzahlen verbessern und ist hier einfach zu realisieren.

**Fig. 10** zeigt das Flussdiagramm der Kommutierungssteuerung COMM_CTL S108.

Bei S110 wird nach der Gleichung (7) die aktuelle Zeitdifferenz t_CALC, bezogen auf den Referenzzeitpunkt RefTime, berechnet. Bei S112 wird geprüft, ob die Zeit t_BLOCK_START noch nicht erreicht ist. Falls Ja, geht das Programm direkt nach Return S114. Falls Nein, geht das Programm zu S116, wo geprüft wird, ob das Signal S31 bereits den Wert 1 hat, ob also der Transistor 30 bereits eingeschaltet wurde. Falls Nein, geht das Programm zum Schritt S118, wo S31 = 1 gesetzt und gespeichert wird, d.h. der Transistor 30 wird eingeschaltet, und ein Strom $i_1$ beginnt in der Wicklung 24 zu fließen. Anschließend wird bei S120 der Port 82 auf HIGH geschaltet, d.h. der Beginn eines Impulses 84 wird erzeugt. Danach geht das Programm zum Schritt S122.

Falls in S116 die Antwort Ja ist, geht das Programm direkt zu S122.

In S122 wird geprüft, ob der Wert t_BLOCK1_END bereits erreicht ist. Falls Ja, wird in S124 das Signal S31 auf LOW geschaltet, so dass der Transistor 30 abgeschaltet wird, und anschließend geht das Programm zu S114.

Falls bei S122 festgestellt wird, dass die Zeit t_BLOCK1_END noch nicht erreicht ist, geht das Programm zu S126. Dort wird geprüft, ob der Wert t_BLOCK2_END erreicht ist. Falls Nein, geht das Programm direkt zu S114. Falls Ja, wird in S128 Port 82 auf LOW gesetzt, d.h. der Impuis 84 wird beendet und hat in diesem Fall eine Zeitdauer von X * W. Der Wert X kann in geeigneter Weise vorgegeben werden. Ein Wert von etwa 50 % hat sich bei Versuchen als vorteilhaft erwiesen.

Die Steuerung für den anderen Endstufentransistor 32 erfolgt völlig analog und wird deshalb nicht dargestellt.

Beim Gegenstand vorliegender Schrift sind ersichtlich vielfache Abwandlungen und Modifikationen möglich. Z.B. könnte man statt des einen Transistors 58, der über die Dioden 54, 56 mehrere Endstufen 30, 32 beeinflusst, zwei separate Transistoren verwenden, von denen einer den Basisstrom des Transistors 30 und der andere den Basisstrom des Transistors 32 beeinflusst, und diese könnten ihrerseits vom Transistor 66 über entsprechende Dioden beeinflusst werden, oder man könnte in diesem Fall auch zwei separate Transistoren 66 verwenden. In Fig. 4 könnte der Transistor 66 ersichtlich ebenso gut vom Signal S33 gesteuert werden wie vom Signal S31, da sich diese Signale nur durch eine Phasenverschiebung unterscheiden. Solche und ähnliche Abwandlungen liegen im Ermessen des Fachmanns.

**Patentansprüche**

1. Verfahren zur Steuerung der Kommutierung bei einem elektronisch kommutierten Motor (20), der einen Stator mit mindestens einer Phase (24, 26) und einen permanentmagnetischen Rotor (22) aufweist, und dem

   - ein Strombegrenzer (36, 58) sowie
   - ein Regler (18) zum Regeln einer Motorgröße

   zugeordnet sind, wobei

- der Strombegrenzer (36, 58) zur Begrenzung des Stromes (I) in der mindestens einen Phase (24, 26) auf einen Vorgabewert ausgebildet ist, und
- die Regelung mittels des Reglers (18) durch Veränderung des zeitlichen Abstandes (W) zwischen Einschalten (t1) und Ausschalten (t2) des Stromes (i$_1$, i$_2$) in der mindestens einen Phase erfolgt,

mit folgendem Schritt:

abhängig vom prozentualen Verhältnis (W/T)

- des zeitlichen Abstandes (W) zwischen Einschalten (t1) und Ausschalten (t2) des Stromes (i$_1$, i$_2$) in der mindestens einen Phase (24, 26)
- zur Zeitdauer (T) einer Drehung des Rotors (22) um einen vorgegebenen Drehwinkel

wird der Vorgabewert, auf den der Strombegrenzer den Strom (i$_1$, i$_2$) in der mindestens einen Phase begrenzt, verändert.

2. Verfahren nach Anspruch 1, bei welchem mit zunehmendem Wert dieses prozentualen Verhältnisses (W/T) der Vorgabewert für den Strombegrenzer erhöht wird.

3. Verfahren nach Anspruch 1 oder 2, bei weichem der Vorgabewert (Fig. 7d: u$_C$) während der Dauer eines in der mindestens einen Phase fließenden Stromimpulses (i$_1$, i$_2$) in einem ersten Zeitraum (Fig. 7e: t5 .. t6) auf einen zunehmenden Wert und in einem zweiten, darauf folgenden Zeitraum (Fig. 7e: t6 .. t7) auf einen abnehmenden Wert eingestellt wird.

4. Verfahren nach einem der vorhergehenden Ansprüche, bei welchem der Vorgabewert mittels eines Strombegrenzungs-Steuersignals (Fig. 6, 7: 84) gesteuert wird, weiches, bezogen auf die augenblickliche Frequenz eines zur Steuerung der Kommutierung dienenden Signals (S31, S33), eine Frequenz aufweist, die um einen ganzzahligen Faktor höher ist

5. Verfahren nach Anspruch 4, bei welchem das Strombegrenzungs-Steuersignal (Fig. 6, 7: 84) eine Frequenz hat, die mindestens das Doppelte der Frequenz eines zur Steuerung der Kommutierung dienenden Signals (S31, S33) beträgt.

6. Verfahren nach Anspruch 4 oder 5, bei welchem das Strombegrenzungs-Steuersignal (84) ein Tastverhältnis (X * W/T') aufweist, welches dem Tastverhältnis (W/T) eines zur Steuerung der Kommutierung dienenden Signals (S31, S33) zumindest ähnlich ist.

7. Verfahren nach Anspruch 1 zur Steuerung der Kommutierung bei einem elektronisch kommutierten Motor (20), der einen Stator mit mindestens einer Phase (24, 26) und einen permanentmagnetischen Rotor (22) aufweist, mit folgenden Schritten:

Zum Steuern des Ein- und Ausschaltens des Stromes (i$_1$) in dieser mindestens einen Phase (24, 26) wird ein erstes Signal (S31) erzeugt, das eine durch die Drehzahl des Motors bestimmte Frequenz (1/T) und ein vorgegebenes Tastverhältnis (W/T) aufweist;
zum Steuern der Form des Stromes (i$_1$) in dieser Phase (24, 26) wird ein zweites Signal (84) erzeugt, welches die doppelte Frequenz (2/T) des ersten Signals (S31) und ein ähnliches Tastverhältnis (X * W/T') wie dieses aufweist.

8. Elektronisch kommutierter Motor (20)

- mit einem Stator, welcher mindestens einen Wicklungsstrang (24, 26) aufweist,
- und mit einem permanentmagnetischen Rotor (22),

wobei in Reihe mit diesem Wicklungsstrang (24, 26) ein erstes durch ein erstes Steuersignal (S31, S33) steuerbares Halbleiterelement (30, 32) und ein Messglied (36) zum Erfassen des durch diesen Wicklungsstrang (24, 26) fließenden Stromes (i$_1$, i$_2$) vorgesehen sind,
ferner mit einem von der Spannung (u$_R$) an diesem Messglied (36) steuerbaren zweiten steuerbaren Halbleiterelement (58), welches abhängig von seinem Zustand die Größe des Steuersignals (S31, S33) beeinflusst, welches dem ersten Halbleiterelement (30, 32) zuführbar ist, um bei einem Ansteigen des Stromes (i) durch den Widerstand (36) die Leitfähigkeit dieses ersten Halbleiterelements (30, 32) zu reduzieren und dadurch diesen Strom (I) nach oben zu begrenzen, und mit einem dritten steuerbaren Halbieiterelement (66), welches abhängig von seinem Zustand die Leitfähigkeit des zweiten Halbleiterelements (58) beeinflusst, wobei die Leitfähigkeit dieses dritten Halbleiterelements (66) durch ein zusätzliches Steuersignal ($u_C$) steuerbar ist, um zusätzlich zu der Beeinflussung des zweiten Halbleiterelements (58) durch die Spannung ($u_R$) am Messgtied (36) auch eine Beeinflussung des zweiten Halbleiterelements (58) durch das zusätzliche Steuersignal ($U_C$) zu ermöglichen, wobei das zusätzliche Steuersignal ($u_C$) abhängig vom prozentualen Verhältnis (W/T) des zeitlichen Abstands (W) zwischen Einschalten (t1) und Ausschalten (t2) des Stromes (i1, i2) in der mindestens einen Phase (24, 26) zur Zeitdauer (T) einer Drehung des Rotors (22) um einen vorgegebenen Drehwinkel ist.

9. Motor nach Anspruch 8, bei welchem die Leitfähigkeit des dritten Halbleiterelements (66) abhängig vom Informationsgehalt eines Steuersignals (S31) steuerbar ist, welches einer Steuerelektrode des ersten Halbleiterelements (30, 32) im Betrieb des Motors (20) zugeführt wird, um die Kommutierung dieses Halbleiterelements (30, 32) zu steuern.

10. Motor nach Anspruch 9, bei weichem das der Steuerelektrode des ersten Halbleiterelements (30, 32) zugeführte Signal (S31, S33) über ein Siebglied (70, 76, 78) dem dritten Halbleiterelement (66) als zusätzliches Steuersignal ($u_C$) zuführbar ist.

11. Elektronisch kommutierter Motor nach Anspruch 8

   - mit einem Stator, welcher mindestens zwei Wicklungsstränge (24, 26) aufweist,

   wobei in Reihe mit jedem Wicklungsstrang (24, 26) ein durch ein zugeordnetes erstes Steuersignal (S31, S33) steuerbares Halbleiterelement (30, 32) für die Steuerung des durch diesen Wicklungsstrang fließenden Strangstromes ($i_1$, $i_2$) vorgesehen ist,
   und zur Erfassung des in den Wicklungssträngen fließenden Stromes (I) ein gemeinsames Messglied (36) vorgesehen ist,
   ferner mit einem dem gemeinsamen Messglied (36) zugeordneten und von der Spannung ($u_R$) an diesem steuerbaren Halbleiterelement (58), welches jeweils über eine Diode (54, 56) abhängig von seinem Zustand die Größe desjenigen Steuersignals (S31, S33) beeinflusst, welches dem gerade leitenden Halbleiterelement (30, 32) für die Steuerung des diesem zugeordneten Strangstromes ($i_1$, $i_2$) zuführbar ist, um beim Ansteigen des Stromes (I) durch das Messglied (36) die Leitfähigkeit dieses gerade leitenden Halbleiterelernents (30, 32) zu reduzieren und dadurch diesen Strom (I) nach oben zu begrenzen.

12. Motor nach Anspruch 11, bei welchem die Leitfähigkeit des dritten Halbleiterelements (66) durch das Tastverhäitnls (W/T) des ersten Steuersignals (S31, S33) beeinflusst ist.

13. Motor nach Anspruch 11 oder 12, bei welchem die Leitfähigkeit des dritten Halbleiterelements (66) durch ein von einem ersten Steuersignal (S31, S33) abgeleitetes zusätzliches Steuersignal (84) steuerbar ist, welches eine Frequenz hat, die zur Frequenz des ersten Steuersignals (S31, S33) in einem vorgegebenen Verhältnis steht und höher ist als diese.

14. Motor nach Anspruch 13, bei welchem der Informationsgehalt des zusätzlichen Steuersignals (84) im wesentlichen durch den Informationsgehalt des ersten Steuersignals (S31, S33) bestimmt ist.

15. Elektronisch kommutierter Motor (20) nach Anspruch 8, bei welchem ein µC (27) dazu ausgebildet ist, das zusätzliche Steuersignal (84) zu erzeugen, dessen Frequenz (1/T') ein geradzahliges Vielfaches der Frequenz (1/T) des ersten Steuersignals (S31) beträgt und das dazu dient, die Form des durch den mindestens einen Wicklungsstrang (24) fließenden Stromes ($I_1$) zu beeinflussen.

16. Motor nach Anspruch 15, bei weichem das Tastverhältnis (X * W/T') des zusätzlichen Steuersignals (84) dem Tastverhältnis (W/T) des ersten Steuersignals (S31) ähnlich ist.

17. Motor nach Anspruch 15 oder 16, bei welchem die Frequenz (1/T') des zusätzlichen Steuersignals (84) das Doppelte der Frequenz (1/T) des ersten Steuersignals (S31) beträgt.

18. Motor nach einem der Ansprüche 15 bis 17, bei welchem ein drittes steuerbares Halbleiterelement (66) vorgesehen ist, welches abhängig vom zusätzlichen Steuersignal (84) die Leitfähigkeit des mit dem mindestens einen Wicklungsstrang (24) in Reihe geschalteten steuerbaren Halbleiterelements (30) beeinflusst, wenn letzteres vom ersten Steuersignal (S31) eingeschaltet ist.

**19.** Motor nach einem der Ansprüche 8 bis 18, dessen Drehzahl von einer Temperatur gesteuert ist in der Weise, dass bei einer niedrigen Temperatur die Drehzahl des Motors niedriger ist als bei einer höheren Temperatur.

**20.** Motor nach einem der Ansprüche 8 bis 19, dem ein Drehzahlregler zugeordnet ist, welcher die Motordrehzahl auf einen vorgegebenen Wert ($n_{soll}$) regelt.

**21.** Motor nach Anspruch 20, bei welchem der vorgegebene Wert ($n_{soll}$) die Funktion einer Temperatur ist.

**Claims**

**1.** Method for controlling the commutation in an electronically commutated motor (20) which comprises a stator with at least one phase (24, 26) and a permanent magnet rotor (22) and has associated therewith

- a current limiting arrangement (36, 58) and
- a controller (18) for regulating a motor variable,

wherein

- the current limiting arrangement (36, 58) is designed to limit the current (I) in the at least one phase (24, 26) to a preset value, and
- the regulation by means of the controller (18) is carried out by changing the time gap (W) between switching on (t1) and switching off (t2) the current ($i_1$, $i_2$) in the at least one phase,

with the following step:

the preset value to which the current limiting arrangement limits the current ($i_1$, $i_2$) in the at least one phase, is changed depending on the percentage ratio (W/T)

- of the time gap (W) between switching on (t1) and switching off (t2) the current ($i_1$, $i_2$) in the at least one phase (24, 26)
- to the length of time (T) of a rotation of the rotor (22) through a predetermined rotational angle.

**2.** Method according to claim 1, in which the preset value for the current limiting arrangement is increased as the value of this percentage ratio (W/T) increases.

**3.** Method according to claim 1 or 2, in which for the duration of a current pulse ($i_1$, $i_2$) flowing in the at least one phase, the preset value (fig. 7d: $u_C$) is set to an increasing value in a first period of time (fig. 7e: t5 .. t6) and to a decreasing value in a second period of time following thereon (fig. 7e: t6 .. t7).

**4.** Method according to one of the preceding claims, in which the preset value is controlled by means of a current limiting control signal (figs. 6, 7: 84) which has a frequency which is higher by an integral factor than the instantaneous frequency of a signal (S31, S33) serving for controlling the commutation.

**5.** Method according to claim 4, in which the current limiting control signal (figs. 6, 7: 84) has a frequency which is at least double the frequency of a signal (S31, S33) serving for controlling the commutation.

**6.** Method according to claim 4 or 5, in which the current limiting control signal (84) has a pulse duty cycle (X * W/T') which is at least similar to the pulse duty cycle (W/T) of a signal (S31, S33) serving for controlling the commutation.

**7.** Method according to claim 1 for controlling the commutation in an electronically commutated motor (20) which comprises a stator with at least one phase (24, 26) and a permanent magnet rotor (22), with the following steps:

a first signal (S31), which has a frequency (1/T) determined by the rotational speed of the motor and a predetermined pulse duty cycle (W/T), is produced to control the switching on and switching off of the current ($i_1$) in this at least one phase (24, 26);

a second signal (84), which has double the frequency (2/T) of the first signal (S31) and a similar pulse duty cycle (X * W/T') to this signal, is produced to control the shape of the current ($i_1$) in this phase (24, 26).

8. Electronically commutated motor (20)

   - with a stator which comprises at least one winding phase (24, 26),
   - and with a permanent magnet rotor (22),

   wherein a first semiconductor element (30, 32)
   controllable by a first control signal (S31, S33) and a measuring element (36) for detecting the current ($i_1$, $i_2$) flowing through one winding phase (24, 26) are provided in series with this winding phase (24, 26),
   further with a second controllable semiconductor element (58) which is controllable by the voltage ($u_R$) at this measuring element (36) and independently of its state influences the magnitude of the control signal (S31, S33) which can be fed to the first semiconductor element (30, 32) in order to reduce the conductivity of this first semiconductor element (30, 32) in the event of the current (I) through the resistor (36) rising and thereby limit this current (I) at the upper end,
   and with a third controllable semiconductor element (66) which influences the conductivity of the second semiconductor element (58) depending on its state,
   wherein the conductivity of this third semiconductor element (66) is controllable by an additional control signal ($u_C$) in order to allow the second semiconductor element (58) to be influenced by the additional control signal ($u_C$) in addition to the influencing of the second semiconductor element (58) by the voltage ($u_R$) at the measuring element (36), wherein the additional control signal ($u_C$) is dependent on the percentage ratio (W/T) of the time gap (W) between switching on (t1) and switching off (t2) the current ($i_1$, $i_2$) in the at least one phase (24, 26) to the length of time (T) of a rotation of the rotor (22) through a predetermined rotational angle.

9. Motor according to claim 8, in which the conductivity of the third semiconductor element (66) is controllable depending on the information content of a control signal (S31) which is fed to a control electrode of the first semiconductor element (30, 32) during the operation of the motor (20) in order to control the commutation of this semiconductor element (30, 32).

10. Motor according to claim 9, in which the signal (S31, S33) fed to the control electrode of the first semiconductor element (30, 32) can be fed through a filtering element (70, 76, 78) to the third semiconductor element (66) as an additional control signal ($u_C$).

11. Electronically commutated motor according to claim 8,

    - with a stator which comprises at least two winding phases (24, 26),

    wherein a semiconductor element (30, 32) controllable by an associated first control signal (S31, S33) is provided in series with each winding phase (24, 26) for controlling the phase current ($i_1$, $i_2$) flowing through this winding phase, and a common measuring element (36) is provided for detecting the current (I) flowing in the winding phases, further with a semiconductor element (58) which is associated with the common measuring element (36) and controllable by the voltage ($u_R$) at the latter and in each case influences the magnitude of the control signal (S31, S33) which can be fed to the semiconductor element (30, 32) just turned on for controlling the phase current ($i_1$, $i_2$) associated with this through a diode (54, 56) depending on its state in order to reduce the conductivity of this semiconductor element (30, 32) which is just turned on when the current (I) through the measuring element (36) is rising and thereby limit this current (I) at the upper end.

12. Motor according to claim 11, in which the conductivity of the third semiconductor element (66) is influenced by the pulse duty cycle (W/T) of the first control signal (S31, S33).

13. Motor according to claim 11 or 12, in which the conductivity of the third semiconductor element (66) is controllable by an additional control signal (88) which is derived from a first control signal (S31, S33) and has a frequency which stands in a predetermined relationship to the frequency of the first control signal (S31, S33) and is higher than the latter.

**14.** Motor according to claim 13, in which the information content of the additional control signal (84) is essentially determined by the information content of the first control signal (S31, S33).

**15.** Electronically commutated motor (20) according to claim 8, in which a microcontroller (27) is designed to produce the additional control signal (84) the frequency (1/T') of which is an even-numbered multiple of the frequency (1/T) of the first control signal (31) and serves to influence the shape of the current ($i_1$) flowing through the at least one winding phase (24).

**16.** Motor according to claim 15, in which the pulse duty cycle (X * W/T') of the additional control signal (84) is similar to the pulse duty cycle (W/T) of the first control signal (S31).

**17.** Motor according to claim 15 or 16, in which the frequency (1/T') of the additional control signal (84) is double the frequency (1/T) of the first control signal (S31).

**18.** Motor according to one of claims 15 to 17, in which a third controllable semiconductor element (66) is provided which influences the conductivity of the controllable semiconductor element (30) connected in series with the at least one winding phase (24) dependent on the additional control signal (84) when the latter semiconductor element is switched on by the first control signal (S31).

**19.** Motor according to one of claims 8 to 18, the rotational speed of which is controlled by a temperature such that at a low temperature the rotational speed of the motor is lower than at a higher temperature.

**20.** Motor according to one of claims 8 to 19, which has associated therewith a rotational speed controller which regulates the motor rotational speed to a predetermined value ($n_{set}$).

**21.** Motor according to claim 20, in which the predetermined value ($n_{set}$) is the function of a temperature.

**Revendications**

**1.** Procédé pour commander la commutation d'un moteur à commutation électronique (20) qui présente un stator à au moins une phase (24, 26) et un rotor à aimant permanent (22), et auquel sont associés

- un limiteur de courant (36, 58) ainsi que
- un régulateur (18) pour réguler une grandeur du moteur,

dans lequel

- le limiteur de courant (36, 58) est conçu pour limiter le courant (I) dans ladite au moins une phase (24, 26) à une valeur fixée et
- la régulation au moyen du régulateur (18) est effectuée par modification de l'intervalle de temps (W) entre activation (t1) et désactivation (t2) du courant ($i_1$, $i_2$) dans ladite au moins une phase,

comportant l'étape suivante :

en fonction du rapport en pour cent (W/T) entre

- l'intervalle de temps (W) entre activation (t1) et désactivation (t2) du courant ($i_1$, $i_2$) dans ladite au moins une phase
- et la durée (T) d'une rotation du rotor (22) d'un angle de rotation défini,

la valeur fixée à laquelle le limiteur de courant limite le courant ($i_1$, $i_2$) dans ladite au moins une phase est modifiée.

**2.** Procédé selon la revendication 1, dans lequel la valeur fixée pour le limiteur de courant augmente en même temps que la valeur de ce rapport en pour cent (W/T).

**3.** Procédé selon la revendication 1 ou 2, dans lequel, pendant la durée d'une impulsion de courant ($i_1$, $i_2$) circulant

dans ladite au moins une phase, la valeur fixée (fig. 7d : u$_C$) est réglée à une valeur croissante dans un premier intervalle de temps (fig. 7e : t5 ... t6) et à une valeur décroissante dans un deuxième intervalle de temps suivant (fig. 7e : t6 ... t7).

4. Procédé selon l'une des revendications précédentes, dans lequel la valeur fixée est commandée au moyen d'un signal de commande de limitation de courant (fig. 6, 7 : 84), lequel présente, par rapport à la fréquence instantanée d'un signal (S31, S33) servant à la commande de la commutation, une fréquence plus élevée d'un facteur entier.

5. Procédé selon la revendication 4, dans lequel le signal de commande de limitation de courant (fig. 6, 7 : 84) a une fréquence qui est au moins le double de la fréquence d'un signal (S31, S33) servant à la commande de la commutation.

6. Procédé selon la revendication 4 ou 5, dans lequel le signal de commande de limitation de courant (84) présente un rapport cyclique (X * W/T') qui est au moins similaire au rapport cyclique (W/T) d'un signal (S31, S33) servant à la commande de la commutation.

7. Procédé selon la revendication 1 pour commander la commutation d'un moteur à commutation électronique (20) qui présente un stator à au moins une phase (24, 26) et un rotor à aimant permanent (22), comportant les étapes suivantes :

   pour commander l'activation et la désactivation du courant (i$_1$) dans cette au moins une phase (24, 26), on génère un premier signal (S31) qui présente une fréquence (1/T) déterminée par la vitesse de rotation du moteur et un rapport cyclique (W/T) défini ;
   pour commander la forme du courant (i$_1$) dans cette phase (24, 26), on génère un deuxième signal (84) qui présente une fréquence (2/T) double de celle du premier signal (S31) et un rapport cyclique (X * W/T') similaire à celui de ce premier signal (S31).

8. Moteur à commutation électronique (20)

   - avec un stator qui présente au moins un enroulement (24, 26)
   - et avec un rotor à aimant permanent (22),

   dans lequel il est prévu en série avec cet enroulement (24, 26) un premier élément à semi-conducteurs (30, 32) commandable par un premier signal de commande (S31, S33) et un circuit de mesure (36) pour saisir le courant circulant à travers cet enroulement (24, 26), ainsi qu'avec un deuxième élément à semi-conducteurs (58) commandable par la tension (u$_R$) à ce circuit de mesure (36), lequel influence en fonction de son état la grandeur du signal de commande (S31, S33) qui peut être amené au premier élément à semi-conducteurs (30, 32) pour, en cas d'augmentation du courant (I) à travers la résistance (36), réduire la conductibilité de ce premier élément à semi-conducteurs (30, 32) et ainsi limiter vers le haut ce courant (I), et avec un troisième élément à semi-conducteurs (66) commandable, lequel influence en fonction de son état la conductibilité du deuxième élément à semi-conducteurs (58), la conductibilité de ce troisième élément à semi-conducteurs (66) étant commandable par un signal de commande supplémentaire (u$_C$) pour permettre, en plus de l'influence sur le deuxième élément à semi-conducteurs (58) par la tension (u$_R$) au circuit de mesure (36), une influence sur le deuxième élément à semi-conducteurs (58) par le signal de commande supplémentaire (u$_C$), ce signal de commande supplémentaire (u$_C$) dépendant du rapport en pour cent (W/T) de l'intervalle de temps (W) entre activation (t1) et désactivation (t2) du courant (i$_1$, i$_2$) dans l'au moins une phase (24, 26) à la durée (T) d'une rotation du rotor (22) d'un angle de rotation défini.

9. Moteur selon la revendication 8, dans lequel la conductibilité du troisième élément à semi-conducteurs (66) est commandable en fonction du contenu informatif d'un signal de commande (S31) qui est amené à une électrode de commande du premier élément à semi-conducteurs (30, 32) pendant le fonctionnement du moteur (20) afin de commander là commutation de cet élément à semi-conducteurs (30, 32).

10. Moteur selon la revendication 9, dans lequel le signal (S31, S33) amené à l'électrode de commande du premier élément à semi-conducteurs (30, 32) peut être amené via un circuit de filtrage (70, 76) au troisième élément à semi-conducteurs (66) en tant que signal de commande supplémentaire (u$_C$).

11. Moteur à commutation électronique selon la revendication 8

- avec un stator qui présente au moins deux enroulements (24, 26),

dans lequel il est prévu en série avec chaque enroulement (24, 26) un élément à semi-conducteurs (30, 32) commandable par un premier signal de commande (S31, S33) associé pour la commande du courant de phase ($i_1$, $i_2$) circulant dans cet enroulement, et il est prévu un circuit de mesure commun (36) pour la saisie du courant (I) circulant dans les enroulements, ainsi qu'avec un élément à semi-conducteurs (58) associé au circuit de mesure commun (36) et commandable par la tension ($u_R$) à celui-ci, lequel influence chaque fois via une diode (54, 56) en fonction de son état la grandeur du signal de commande (S31, S33) qui peut être amené à l'élément à semi-conducteurs (30, 32) en train de conduire pour la commande du courant de phase ($i_1$, $i_2$) qui lui est associé afin, en cas d'augmentation du courant (I) à travers le circuit de mesure (36), de réduire la conductibilité de cet élément à semi-conducteurs (30, 32) en train de conduire et ainsi de limiter vers le haut ce courant (I).

12. Moteur selon la revendication 11, dans lequel la conductibilité du troisième élément à semi-conducteurs (66) est influencée par le rapport cyclique (W/T) du premier signal de commande (S31, S33).

13. Moteur selon la revendication 11 ou 12, dans lequel la conductibilité du troisième élément à semi-conducteurs (66) est influencée par un signal de commande supplémentaire (84) dérivé du premier signal de commande (S31, S33) qui a une fréquence ayant un rapport défini avec la fréquence du premier signal de commande (S31, S33) et qui est plus élevée que celle-ci.

14. Moteur selon la revendication 13, dans lequel le contenu informatif du signal de commande supplémentaire (84) est essentiellement déterminé par le contenu informatif du premier signal de commande (S31, S33).

15. Moteur à commutation électronique (20) selon la revendication 8, dans lequel un µC (27) est conçu pour générer le signal de commande supplémentaire (84) dont la fréquence (1/T') est un multiple entier de la fréquence (1/T) du premier signal de commande (S31) et qui sert à influencer la forme du courant ($i_1$) circulant à travers l'au moins un enroulement (24).

16. Moteur selon la revendication 15, dans lequel le rapport cyclique (X * W/T') du signal de commande supplémentaire (84) est similaire au rapport cyclique (W/T) du premier signal de commande (S31).

17. Moteur selon la revendication 15 ou 16, dans lequel la fréquence (1/T') du signal de commande supplémentaire (84) est le double de la fréquence (1/T) du premier signal de commande (S31).

18. Moteur selon l'une des revendications 15 à 17, dans lequel il est prévu un troisième élément à semi-conducteurs commandable (66) qui influence en fonction du signal de commande supplémentaire (84) la conductibilité de l'élément à semi-conducteurs (30) commandable couplé en série avec l'au moins un enroulement (24) lorsque cet élément à semi-conducteurs (30) est activé par le premier signal de commande (S31).

19. Moteur selon l'une des revendications 8 à 18 dont la vitesse de rotation est commandée de telle manière que la vitesse de rotation du moteur est plus basse à une température basse qu'à une température plus élevée.

20. Moteur selon l'une des revendications 8 à 19, auquel est associé un régulateur de vitesse qui régule la vitesse de rotation du moteur à une valeur définie ($n_{soll}$).

21. Moteur selon la revendication 20, dans lequel la valeur définie ($n_{soll}$) est la fonction d'une température.

Fig.1

Fig. 2

Fig. 3

Fig. 4

Fig.5

Fig. 6

EP 1 415 390 B1

Fig. 7

Fig.8

Fig.9

65,34 ms
(RefTime)

66,34 ms

71,60 ms     74,1 ms

A)

TIMER 1

t_CALC 40

t40     t41

100

HALL

B)

5 ms     5 ms
(t_HALL)     5 ms
(t_HALL)

0°el.     180°el.     360°el. 405°el.     495°el. 540°el.
(δ0)     (δ1)     (δ2)

6,25 ms
(t_BLOCK_START)     S 31

2,5 ms
(W)

C)

8,75 ms
(t_BLOCK1_END)     n_Control
W = 2,5 ms

98

7,5 ms
(t_Block 2_END)

6,25 ms
(t_Block_Start)     84

D)

EP 1 415 390 B1

COMM_CTL — S 108

t_CALC := t_TIMER-RefTime — S 110

Y ← t_CALC < t_BLOCK_START? — S 112

N

S31 := 1? — S 116

N → S31 := 1 — S 118

Port 82 := HIGH — S 120

Y

S 122 — t_CALC >= t_BLOCK1_END? — Y

N → S31 := 0 — S 124

N — S 126 — t_CALC >= t_BLOCK2_END? — N

Y

Port 82 := LOW — S 128

S 114

RETURN

*Fig.10*

24